(19) 

**Europäisches Patentamt**
**European Patent Office**
**Office européen des brevets**

(11) **EP 2 068 520 A1**

(12) **EUROPEAN PATENT APPLICATION**

(43) Date of publication:
**10.06.2009 Bulletin 2009/24**

(51) Int Cl.:
*H04L 27/26* (2006.01)     *H04B 10/18* (2006.01)

(21) Application number: **07291471.6**

(22) Date of filing: **07.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventor: **Bülow, Henning**
**70806 Kornwestheim (DE)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54) **Optical OFDM receiver channel monitor**

(57)     The present invention relates to the estimation of a plurality of physical channel parameters of an optical transmission medium in the context of orthogonal frequency-division multiplexing (OFDM). The equalizer parameter settings of the sub-carrier equalizers of the OFDM receiver are processed in a monitor processor to provide parameters indicative of distortions in the transmission medium, such as chromatic dispersion, polarization mode dispersion and polarization dependent loss. These parameters are forwarded to a network management system or a control plane and can be used - inter alia - for manual or automated routing decisions.

Fig. 2

**Description**

The present invention relates to the estimation of physical channel parameters of an optical transmission medium in the context of orthogonal frequency-division multiplexing (OFDM).

Orthogonal Frequency-Division Multiplexing is a digital multi-carrier modulation scheme which uses a large number of closely-spaced orthogonal sub-carriers. Each sub-carrier is modulated with a conventional modulation scheme (such as quadrature amplitude modulation) at a low symbol rate, maintaining data rates similar to conventional single-carrier modulation schemes in the same bandwidth. In practice, OFDM signals are generated and detected using the Fast Fourier transform (FFT) algorithm.

OFDM is being used in many wireless and wired application, such as WLAN, WIMAX and ADSL. Currently it is also being evaluated, as a bandwidth efficient transmission format, for high bit-rate optical transmission systems and optical backbones, such as 40Gb and 100Gb Ethernet for terrestrial metro and long-haul applications as well as submarine systems, using existing infrastructure.

In optical transmission systems, a signal is subjected to various distortions, such as chromatic dispersion (CD) and polarization mode dispersion (PMD). CD is the phenomenon that the phase velocity of a wave depends on its frequency and consequently CD affects mainly the phase of the received signal. PMD is the phenomenon that two different polarizations of light in a waveguide, which normally travel at the same speed, travel at different speeds due to random imperfections and asymmetries, causing random spreading of optical pulses. In OFDM systems, this mainly affects the amplitude of the received signal. However, as the PMD effects are random and time-dependent, they need to be constantly monitored and compensated or equalized.

The primary advantage of OFDM over single-carrier schemes is its ability to cope with severe channel conditions without complex equalization filters. Channel equalization is simplified because OFDM may be viewed as using many slowly-modulated narrowband signals rather than one rapidly-modulated wideband signal. If the OFDM sub-carriers are sufficiently narrow-banded, i.e. if the number of OFDM sub-carriers is sufficiently large, it can be assumed that the effects of frequency-selective physical channel parameters are flat over an OFDM sub-carrier. This makes equalization far simpler at the receiver in OFDM in comparison to conventional single-carrier modulation. The equalizer only has to correct each OFDM sub-carrier by constant amplitude and phase values.

For equalization and synchronization purposes, OFDM symbols may carry pilot signals which are used at the receiver side to estimate the channel conditions of the sub-carrier. In US patent application US2004/0258171, an OFDM receiver apparatus with an equalizer to estimate distortion of the phase and/or amplitude of a sub-carrier from the OFDM signal is described. The receiver comprises a distortion compensator subjecting the sub-carrier to distortion compensation depending on the estimated distortion. In European patent application EP0903898, an equalizer for OFDM receivers is disclosed, which compensates the amplitude distortion and the phase delay of a sub-carrier in an OFDM receiver. Both prior art documents discuss methods for the compensation of a single OFDM sub-carrier only.

The present invention provides a method and a system for determining the overall channel characteristics of a transmission medium based on data available from the sub-carrier equalizers at the OFDM receiver.

It is to be noted, that in the following the term "transmission medium" preferably relates to an optical fibre. Such transmission medium is usually segmented into transmission channels, e.g. in the case of DWDM a plurality of wavelength channels. Each channel is carrying an OFDM signal, which, by definition, is split into a plurality of sub-carriers.

In a first aspect of the present invention, the existing information from several or all OFDM sub-carriers within the OFDM receiver is used to estimate the overall channel condition or characteristics (i.e. physical channel parameters) of the transmission medium. Such estimated parameters can be advantageously provided to the control/management plane for improving the transmission of the OFDM sub-carriers or for supporting network routing decisions.

By way of example, the estimated physical channel parameter may be PMD. It may be beneficial to define a threshold value for such physical channel parameter which triggers an alarm in the control plane, indicating that a transmission channel is impaired. The control plane may then decide to close the respective transmission channel and to reroute the affected traffic via an alternative route. In another example, the estimated physical channel parameter may be fed back to the OFDM receiver which might use this information to improve the equalizer parameter setting, thereby improving the overall transmission performance. By way of example, the equalizer parameter settings of a sub-carrier may be improved by taking into account the parameter settings of the neighbouring sub-carriers and/or the knowledge of the physical channel parameter of the transmission channel.

The control plane or network management unit may store the received channel parameters over a longer period of time and analyse the trend of the channel parameters to determine how the physical channel conditions evolve, e.g. whether a channel deterioration is experienced. The stored channel parameters may be analysed statistically and/or compared to parameters of other channels to support routing decisions. For instance, highly reliable channels may be determined and sensitive data routed over these highly reliable channels.

The transmission medium is preferably an optical fibre and the OFDM transmission based on an optical transmission system. The OFDM receiver may comprise optical and electrical components.

According to another aspect of the invention, a monitor processor is located within an optical OFDM receiver. In many cases, the monitor processor will mainly consist of software updates to already existing HW components, which process already existing information. Consequently, a cost effective monitor for the overall channel condition is being proposed.

According to another aspect of the invention, the proposed monitor processor extracts physical channel parameters by processing the plurality of equalizer settings of an already existing OFDM receiver using sub-carrier equalizers. The equalizer parameter settings may comprise phase and amplitude correction coefficients for the plurality of sub-carriers.

Many underlying physical effects, such as PMD, may vary in time, e.g. due to temperature changes. Consequently, the physical channel parameters may vary in time. Therefore it may be beneficial to continuously estimate the physical channel parameters in order to trace their evolution.

According to another aspect of the invention, the proposed monitor processor is applied to OFDM receivers based on coherent detection. In such cases, additional equalizer parameter settings, such as a coherence matrix, are available for each OFDM sub-carrier and can be used within the monitor processor to determine the plurality of physical channel parameters.

The plurality of physical channel parameters may comprise chromatic dispersion and/or polarization mode dispersion. These parameters are particular useful for network management when provided to the control plane.

When monitoring a transmission line, it is important to have a preferably complete picture of the channel conditions, characterized by a plurality of physical channel parameters which might change over time, as for example in the case of PMD. This information may be used in a network management system (NMS) or in a control plane (CP) for manually initiated or automatically executed routing decisions, as for example in Automatically Switched Optical Networks (ASON). In other words, in order to allow pre-emptive alarms or improved management or improved control plane within optical transmission systems based on OFDM, it is crucial to have access to a preferably complete picture of the physical channel conditions (including but not limited to chromatic dispersion and the actual polarization mode dispersion). It is important to note that those physical channel conditions are not directly related to the phase and/or amplitude distortion occurring to the different sub-carriers of the OFDM signal. Neither an identification of what kind of fibre condition is degraded, nor a quantification or isolation of a fibre condition (or several simultaneous conditions) is possible using the data available for a single sub-carrier distortion only. By way of example, such a fibre condition could be a stress at some point of the optical fibre, which would not be conclusively detectable from the equalizer parameter settings of a single sub-carrier. The present invention proposes to derive the physical channel conditions or physical channel parameters of the transmission channel from the equalizer parameters of the sub-carriers.

The advantages and features of the invention will become apparent from the description of preferred embodiments. The present invention is described in the following by referring to exemplary embodiments illustrated schematically in the accompanying figures, wherein

Fig. 1 illustrates the structure of an optical OFDM transmission system;

Fig. 2 illustrates an embodiment of an OFDM receiver comprising a channel monitor according to the invention; and

Fig. 3 illustrates an embodiment of an OFDM receiver, based on coherent detection, with the proposed channel monitor.

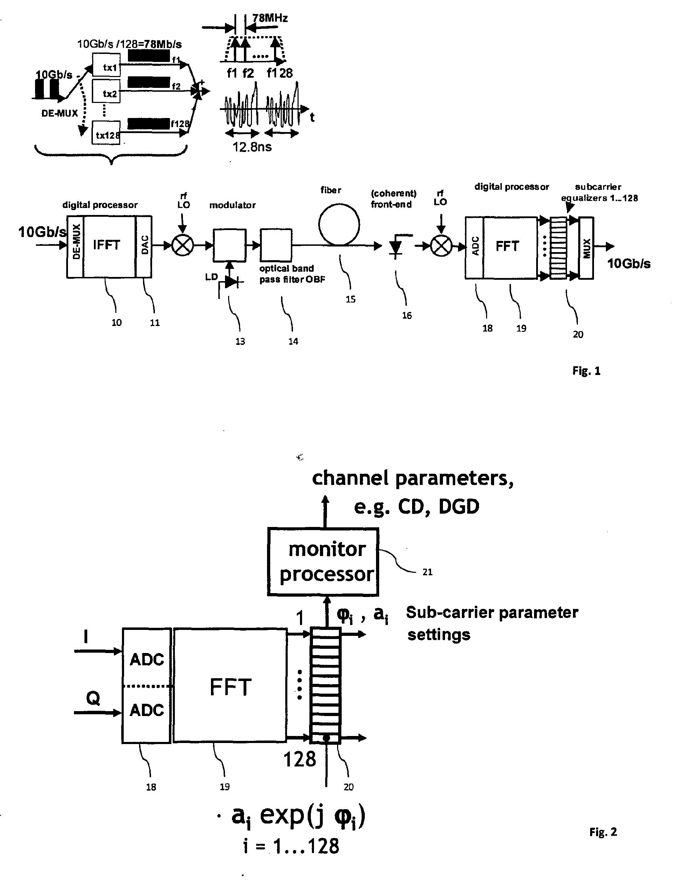

In Fig. 1 a basic and simplified structure of an example optical OFDM transmission system for 10Gb/s is shown schematically. In an optical OFDM system, low bit-rate but densely spaced wavelength sub-carriers are generated by a digital inverse fast Fourier transformer (IFFT). The upper left inset of Fig. 1 shows the electrical and optical spectrum of the, e.g., 128 sub-carriers (centred around the frequencies $f_1,..., f_{128}$) at the output of the inverse FFT transformer 10. DAC 11 and ADC 18 are digital to analogue and analogue to digital converters, respectively. The analogue signal at the output of the DAC 11 is multiplied with a carrier frequency rf LO and transmitted over an optical fibre 15. For this purpose the electrical signal is converted into an optical signal by the light diode modulator 13 and possibly passed through an optical bandpass filter OBF 14.

After transmission, the optical signal is converted into an electrical signal by a front end 16, which is possibly based on a coherent detection. Then the electrical signal is converted down to the baseband frequency by re-applying the carrier frequency rf LO. The data of the wavelength sub-carriers is recovered by Fast Fourier transformation 19 after analogue to digital conversion 18. Due to the narrowband characteristic of the signal in each sub-carrier, the optical distortions of the overall signal relates to a simple phase delay (skew) and amplitude modification of the plurality of individual sub-carrier signals. This applies to the 10Gb/s signal shown in Fig. 1, but also to higher bandwidth signals at rates such as 40Gb/s or even 100Gb/s. Consequently, the phase delay and the amplitude modifications may be compensated by sub-carrier equalizers 20 at the OFDM receiver.

Due to the narrowband characteristics of the sub-carriers, also the overall channel condition characterized by the physical channel parameters relates to the set of phase delays and amplitude disturbance of the plurality of individual sub-carrier signals. Consequently, a monitor processor which takes as input the available sub-carrier information, such as the sub-carrier equalizer settings $a_i$ (relating to the amplitude correctors) and $\varphi_j$ (relating to the phase correctors), for the sub-carriers i, where i goes from 1 to 128 in the present example, may be added to the receiver. This monitor processor determines physical channel parameters, such as the chromatic dispersion, the polarisation mode dispersion or differential group delay (DGD), by processing the data available from the sub-carrier equalizers.

Fig. 2 illustrates an embodiment of the proposed monitor processor 21 which determines physical channel parameters by processing the equalizer parameter settings $(a_i, \varphi_i)$ of an already existing OFDM receiver with sub-carrier equalizers 20.

The real part component Q and the imaginary part component I of the electrical signal are converted into digital signals by the ADCs 18 and processed by the FFT 19. Finally, the sub-carrier signals are equalized in the equalizers 20 by applying the equalizer parameter settings $(a_i, \varphi_i)$. As explained above, the sub-carrier phases $\varphi$ and the amplitudes a are modified by optical distortions such as chromatic dispersion (which affects mainly the phase) or PMD (which affects mainly the amplitude). In order to compensate these distortions, many OFDM receivers comprise sub-carrier channel equalizers, with equalizer settings $a_i$ and $\varphi_i$ for the amplitude and phase correction, respectively. Using prior art methods, these equalizer settings are automatically adapted by the OFDM receiver so as to compensate the said optical distortions of the sub-carriers. In one embodiment of the present invention, these equalizer settings are read out by a channel monitor processor and the underlying channel condition (CD value in ps/nm or PMD value in ps) is calculated and provided to the control and/or management plane. Other applications for such physical channel parameters are manifold.

The extraction of the channel condition (CD value, PMD value) from the equalizer settings ($a_i$ and $\varphi_i$) is based on the fact that the equalizer settings invert the relative transfer function. Theoretically this can be described by: $1/(a_i \exp(j\varphi_i)) = M_i$ with $M_i$ being proportional to the ratio $Iph_i/E_i$ of detected photo diode current $Iph_i$ at the electrical frequency $fe_i = fe_0 + i \cdot \Delta f$ divided by the transmitted optical field $E_i$ at the optical frequency $fo_i = fo_0 + i \cdot \Delta f$. Note that $\Delta f$ is the spectral optical sub-carrier separation which is kept in the electrical domain after the detection process. Moreover, the optical spectrum is more or less kept (depending on the detection scheme) in the electrical domain, but only shifted from $fo_0$ (the optical frequency which is in the range of 192THz for 1.55$\mu$m wavelength) to $fe_0$, which is determined by the transmitted optical carrier, the frequency of the rf generator (see Fig. 1) and/or the frequency of the local oscillator laser diode. The sub-carrier separation $\Delta f$ might be in the range of 100MHz. Hence, M is directly linked to the optical transfer function H(fo) which contains the channel conditions that shall be extracted. For direct detection, an optical carrier is transmitted at the optical carrier frequency foc. The sub-carriers mix themselves at this optical carrier frequency into the electrical domain of the photo diode current leading to the transfer function M(fe) = H(fe+foc). In general, the mathematical formulas for H in the presence of CD and PMD are known; see e.g. E.Voges, K.Petermann, "Optische Kommunikationstechnik. Handbuch für Wissenschaft und Industrie", Springer, 2002, incorporated by reference.

For instance, a least mean square fit of a calculated inverse transfer function $M^{-1}$ as function of the channel condition (CD and PMD) to the equalizer settings can be performed in the controller (e.g. by software or hard wired implementation). Numerical means for best fit, which are different to the mean square error criterion, may also be applied. Further channel conditions, such as polarization dependent loss, PMD of higher orders such as PMD induced chromatic dispersion PCD and PMD induced de-polarization DEPOL as well as optical signal to noise ratio OSNR and self-phase modulation (SPM) due to fibre non-linearity are candidates of channel conditions which can be included in a software routine extracting the channel condition.

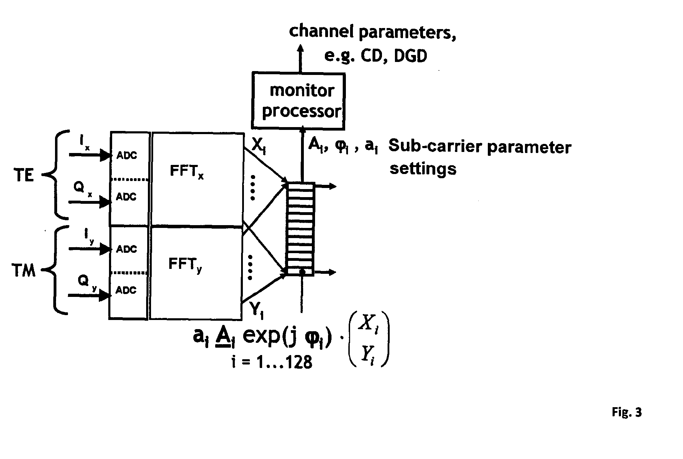

Fig. 3 illustrates another embodiment of the invention. Subject to some modifications, the proposed monitor processor can also be applied to optical OFDM receivers based on coherent detection with a polarization and phase diversity front-end. In the case of coherent detection, the received signal is split into two orthogonally polarized signal streams. In Fig. 3 these signal streams are labelled as TE and TM (or subscript x and y). For each polarization, the signal comprises a real part component Q and an imaginary part component I. In the coherent OFDM receiver, each polarization is separately processed in an FFT processor. At the output of the FFT processor, the sub-carrier equalizers combine $X_i$ and $Y_i$ output of each FFT by applying a matrix multiplication with a complex unitary, i.e. power preserving, 2x2 matrix $A_i$. This matrix is also referred to as a coherency matrix. For each sub-carrier, two parameters describing the matrix $A_i$ are adapted by the OFDM receiver in a similar manner as the phase corrector $\varphi_i$ and the amplitude corrector $a_i$.

As polarization mode distortion is a consequence of the different travelling speed of two different polarizations of light, PMD in the sub-carriers can be easily compensated by simple matrix multiplication. In addition, the matrix parameters (here indicated as $A_i$) can be forwarded to the monitor processor and used to determine physical channel parameters such as PMD and the polarization dependent loss (PDL) (first and higher orders, which are measured e.g. in ps and $ps^2$).

In the case of a coherent detection scheme, the transfer function M is a matrix containing the individual transfer functions between transmitter signal for TEtx and TMtx polarization and the receiver orthogonal polarizations TE and TM of the polarization diversity front-end: $M_{a,b} = Iph_b/E_a$, with a= TE, TM and b= TEtx, TMtx. The corresponding equalizer settings are $a_{a,b}$ and $\varphi_{a,b}$, respectively. With $[m_{a,b}]$ denoting the transfer matrix formed by the four elements $m_{a,b}$ , we analogously obtain for the channel condition extraction from the equalizer settings:

$$[(a_{a,b}\ exp(j\varphi_{a,b})]^{-1} =[M_{a,b}].$$

For instance, the transfer function M for PMD includes an inner matrix containing the differential group delay (DGD), the PMD effect of first order, and two outer rotation matrices with angles $\alpha$ and $\beta$ denoting the polarization orientation of the PMD (PSP) to the coherent receiver axes and the transmitter polarization, respectively:

$$M = \begin{pmatrix} \cos\alpha & \sin\alpha \\ -\sin\alpha & \cos\alpha \end{pmatrix} \begin{pmatrix} \exp(-j\ DGD\ \pi(f-f0)) & 0 \\ 0 & \exp(j\ DGD\ \pi(f-f0)) \end{pmatrix} \begin{pmatrix} \cos\beta & -\sin\beta \\ \sin\beta & \cos\beta \end{pmatrix}$$

Using the proposed monitor processor, it is possible to determine the channel condition characterized by a plurality of physical channel parameters of the transmission medium. As the proposed monitor processor builds upon sub-carrier equalizer parameters, which are already available within OFDM receivers using sub-carrier equalization, such monitor processors could be implemented as software upgrades running on a processor already used for OFDM receiver board supervision. As such, the proposed monitor is low cost.

The present invention is not limited to the disclosed exemplary applications. Other applications can benefit from the invention as well. By way of example, the proposed method could also be applied to wireless OFDM systems, such as WIMAX.

## Claims

1. A network management method for an orthogonal frequency-division multiplexing (OFDM) transmission network comprising an transmission medium, the method comprising the steps:

   • obtaining parameter settings of an OFDM receiver for a plurality of OFDM sub-carriers, the parameter settings being indicative of transmission characteristics of the OFDM sub-carriers;
   • estimating a physical channel parameter of the transmission medium based on the obtained OFDM receiver parameter settings;
   • forwarding the estimated transmission medium channel parameter to a network management plane for consideration in network routing decisions.

2. The method according to claim 1, wherein the receiver parameter settings comprise parameters of OFDM receiver sub-carrier equalizers, and the transmission medium channel parameter is estimated based on the equalizer parameter settings.

3. The method according to claim 2, wherein the equalizer parameter settings comprise phase and amplitude correctors of the plurality of sub-carriers.

4. The method according to claim 1, wherein the transmission medium comprises an optical fibre, and the channel parameter is indicative of signal degradation in the transmission medium such as chromatic dispersion and/or polarization mode dispersion.

5. The method according to claim 1, wherein the OFDM receiver is based on coherent detection.

6. The method according to claim 5, wherein the equalization parameter settings comprise coherency matrix values of the plurality of sub-carriers.

7. The method according to claim 1, wherein the transmission medium channel parameter is estimated continuously in order to monitor its time evolution.

**8.** Orthogonal frequency-division multiplexing (OFDM) transmission network comprising:

- an optical transmission medium;
- an optical OFDM receiver connected to the optical transmission medium, the receiver comprising OFDM sub-carrier equalizers;
- a monitor processor for estimating a physical channel parameter of the transmission medium based on sub-carrier equalizer parameter settings; and
- a network control plane for taking network routing decisions based on the estimated transmission medium channel parameter.

**9.** An optical OFDM receiver that receives a signal after transmission over a transmission medium, wherein the OFDM receiver comprises:

- a plurality of sub-carrier equalizers;
- a monitor processor for estimating at least one physical channel parameter of the transmission medium based on a plurality of equalizer parameter settings received from the sub-carrier equalizers; and
- forwarding means for forwarding the at least one transmission medium channel parameter to a management plane for consideration in network routing decisions.

**10.** The receiver according to claim 9, wherein the monitor processor is implemented as software running on existing processors of the OFDM receiver.

**Amended claims in accordance with Rule 137(2) EPC.**

**1.** A network management method for an orthogonal frequency-division multiplexing (OFDM) transmission network comprising an transmission medium (15), the method comprising the steps:

- obtaining parameter settings of an OFDM receiver (18, 19, 20) for a plurality of OFDM sub-carriers, the parameter settings being indicative of transmission characteristics of the OFDM sub-carriers;
- estimating (21) a physical channel parameter of the transmission medium based on the obtained OFDM receiver parameter settings for a plurality of OFDM sub-carriers;
- forwarding the estimated transmission medium channel parameter to a network management plane for consideration in network routing decisions.

**2.** The method according to claim 1, wherein the receiver parameter settings comprise parameters of OFDM receiver sub-carrier equalizers, and the transmission medium channel parameter is estimated based on the equalizer parameter settings.

**3.** The method according to claim 2, wherein the equalizer parameter settings comprise phase and amplitude correctors of the plurality of sub-carriers.

**4.** The method according to claim 1, wherein the transmission medium (15) comprises an optical fibre, and the channel parameter is indicative of signal degradation in the transmission medium such as chromatic dispersion and/or polarization mode dispersion.

**5.** The method according to claim 1, wherein the OFDM receiver (18, 19, 20) is based on coherent detection.

**6.** The method according to claim 5, wherein the equalization parameter settings comprise coherency matrix values of the plurality of sub-carriers.

**7.** The method according to claim 1, wherein the transmission medium channel parameter is estimated continuously in order to monitor its time evolution.

**8.** Orthogonal frequency-division multiplexing (OFDM) transmission network comprising:

- an optical transmission medium (15);
- an optical OFDM receiver (18, 19, 20) connected to the optical transmission medium (15), the receiver (18, 19, 20) comprising OFDM sub-carrier equalizers (20);
• a monitor processor (21) for estimating a physical channel parameter of the transmission medium (15) based on sub-carrier equalizer parameter settings for a plurality of OFDM sub-carriers; and
• a network control plane for taking network routing decisions based on the estimated transmission medium channel parameter.

**9.** An optical OFDM receiver that receives a signal after transmission over a transmission medium (15), wherein the OFDM receiver comprises:

• a plurality of sub-carrier equalizers (20);
• a monitor processor (21) for estimating at least one physical channel parameter of the transmission medium (15) based on a plurality of equalizer parameter settings received from the sub-carrier equalizers (20) for a plurality of OFDM sub-carriers; and
• forwarding means for forwarding the at least one transmission medium channel parameter to a management plane for consideration in network routing decisions.

**10.** The receiver according to claim 9, wherein the monitor processor (21) is implemented as software running on existing processors of the OFDM receiver.

Fig. 1

channel parameters,
e.g. CD, DGD

monitor
processor

Sub-carrier parameter
settings

$\cdot a_i \exp(j\,\varphi_i)$
$i = 1...128$

Fig. 2

channel parameters, e.g. CD, DGD

monitor processor

$A_i, \varphi_i, a_i$ Sub-carrier parameter settings

$X_i$

$Y_i$

TE

TM

$I_x$ ADC
$Q_x$ ADC
$FFT_x$

$I_y$ ADC
$Q_y$ ADC
$FFT_y$

$$a_i \, \underline{A}_i \, \exp(j \, \varphi_i) \cdot \begin{pmatrix} X_i \\ Y_i \end{pmatrix}$$
$$i = 1\dots128$$

Fig. 3

9

**European Patent Office**

## EUROPEAN SEARCH REPORT

Application Number

EP 07 29 1471

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/025346 A (UNIV MONASH [AU]; LOWERY ARTHUR [AU]; ARMSTRONG JEAN [AU]) 8 March 2007 (2007-03-08) * abstract * * page 1 - page 5 * * page 11 * * page 18, line 26 - line 30 * * figures 1,6 * ----- | 1-10 | INV. H04L27/26 H04B10/18 |
| X | US 2005/180760 A1 (FECED RICARDO [GB] ET AL) 18 August 2005 (2005-08-18) * figures 1-10 * * paragraph [0001] - paragraph [0003] * * paragraph [0006] - paragraph [0008] * * paragraphs [0010], [0018] - [0027], [0070] - [0073], [0106] * ----- | 1-10 | |

|  |  |
|---|---|
|  | TECHNICAL FIELDS SEARCHED (IPC) |
|  | H04L H04B |

The present search report has been drawn up for all claims

| Place of search | Date of completion of the search | Examiner |
|---|---|---|
| Berlin | 8 May 2008 | González Gutiérrez |

EPO FORM 1503 03.82 (P04C01)

**ANNEX TO THE EUROPEAN SEARCH REPORT
ON EUROPEAN PATENT APPLICATION NO.**                    EP 07 29 1471

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2008

| Patent document cited in search report | | Publication date | Patent family member(s) | Publication date |
|---|---|---|---|---|
| WO 2007025346 | A | 08-03-2007 | NONE | |
| US 2005180760 | A1 | 18-08-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040258171 A

- EP 0903898 A

**Non-patent literature cited in the description**

- **E.VOGES ; K.PETERMANN.** Optische Kommunikationstechnik. Handbuch für Wissenschaft und Industrie. Springer, 2002